# FASCICULE DE BREVET EUROPEEN

(11) **EP 0 975 884 B1**
(45) Date de publication et mention de la délivrance du brevet: **30.07.2003**
(21) Numéro de dépôt: 99903763.3
(22) Date de dépôt: 15.02.1999
(51) Int. Cl.: F16D 13/75

(54) **MECANISME D'EMBRAYAGE POUR VEHICULE AUTOMOBILE COMPORTANT UN DISPOSITIF PERFECTIONNE DE RATTRAPAGE D'USURE DES GARNITURES DE FRICTION**
KUPPLUNGSMECHANISMUS FÜR EIN KRAFTFAHRZEUG, MIT EINER VERSCHLEISS-NACHSTELLEINRICHTUNG FÜR DIE REIBBELÄGE
CLUTCH MECHANISM FOR MOTOR VEHICLE COMPRISING AN IMPROVED WEAR TAKE-UP DEVICE FOR FRICTION LININGS

(30) Priorité: 13.02.1998 FR 9801769; 09.12.1998 FR 9815533
(43) Date de publication de la demande: 02.02.2000
(73) Titulaire: VALEO EMBRAYAGES s.a.s., 80009 Amiens Cedex 1 (FR)
(72) Inventeur: DALBIEZ, André, F-95100 Argenteuil (FR); GIROIRE, Jean-Pierre, F-78100 Saint-Germain-en-Laye (FR)
(74) Mandataire: Lemaire, Marc
(86) Numéro de dépôt international: FR9900337
(87) Numéro de publication internationale: WO99041517

(56) Documents cités:
- FR-A- 2 402 114
- FR-A- 2 753 503
- GB-A- 2 313 420
- US-A- 5 186 298
- US-A- 5 634 541
- US-A- 5 803 223

## Description

La présente invention concerne un mécanisme d'embrayage, notamment pour véhicule automobile.

L'invention concerne d'une manière générale un embrayage à friction, notamment pour véhicule automobile, et elle se rapporte plus particulièrement à un embrayage équipé d'un dispositif de rattrapage, ou de compensation, de l'usure due notamment à l'usure d'au moins une garniture de friction, ce dispositif opérant au fur et à mesure de l'usure de ou des garnitures.

L'invention se rapporte au mécanisme d'embrayage à friction que comporte de tels embrayages.

Un embrayage à friction classique comporte notamment un couvercle, un plateau de pression lié en rotation au couvercle tout en pouvant se déplacer axialement par rapport à celui-ci, des moyens d'appui portés par le plateau de pression, des moyens embrayeurs à action axiale agissant entre le couvercle et les moyens d'appui.

L'embrayage comporte aussi un plateau de réaction appartenant à un volant moteur, éventuellement en deux parties pour formation d'un volant amortisseur ou d'un volant flexible, calé en rotation sur un premier arbre, usuellement un arbre menant tel que le vilebrequin du moteur à combustion interne associé à l'embrayage, et supportant par sa périphérie externe le couvercle auquel est attaché, avec mobilité axiale, le plateau de pression.

Le plateau de pression est solidaire en rotation du couvercle et du plateau de réaction tout en pouvant se déplacer axialement sous la sollicitation de moyens embrayeurs à action axiale commandés par des moyens débrayeurs.

Les moyens débrayeurs peuvent consister de manière connue en des ressorts hélicoïdaux, ou en deux rondelles Belleville montées en série, soumis à l'action de leviers de débrayage formant les moyens débrayeurs.

Généralement, les moyens embrayeurs et débrayeurs appartiennent à une même pièce, par exemple à un diaphragme métallique prenant appui sur le fond du couvercle. Le diaphragme peut être monté en série ou en parallèle avec une rondelle Belleville pour assurer une assistance à l'effort de débrayage.

Un disque de friction, portant usuellement deux garnitures de friction à sa périphérie externe, solidaire en rotation d'un arbre, usuellement un arbre mené tel que l'arbre d'entrée de la boîte de vitesses du groupe motopropulseur, est intercalé entre le plateau de pression et le plateau de réaction de façon à être serré entre eux lorsque l'embrayage est en position d'engagement pour transmettre le couple de l'arbre menant à l'arbre mené.

Classiquement, les garnitures de friction sont montées sur un support axialement élastique qui est accouplé de manière rigide ou élastique à un moyeu calé en rotation sur l'arbre mené. Grâce à cette disposition, le disque de friction assiste le diaphragme lors de l'opération de débrayage de l'embrayage. En variante, le support est noyé dans une garniture de friction. Dans tous les cas, le disque de friction comporte au moins une garniture de friction et deux faces de friction pour coopérer respectivement avec le plateau de pression et le plateau de réaction.

Les moyens embrayeurs, le couvercle et le plateau de pression appartiennent à un ensemble unitaire appelé mécanisme d'embrayage à friction.

Les moyens embrayeurs commandent le déplacement axial du plateau de pression lorsqu'ils sont actionnés par une butée de débrayage par l'intermédiaire des moyens débrayeurs.

Au cours de la durée de vie d'un tel embrayage, la ou les garnitures de friction ainsi que les contre-matériaux (plateaux de pression et de réaction) s'usent, ce qui provoque une variation de la position axiale du plateau de pression et celle des moyens embrayeurs à action axiale ainsi que de la butée de débrayage, d'où il s'ensuit une variation de la force de serrage entre le disque de friction d'une part et, d'autre part, les plateaux de pression et de réaction, en raison des modifications des conditions de travail des moyens embrayeurs. La force nécessaire pour débrayer s'en trouve affectée. En dotant un tel embrayage d'un dispositif de rattrapage d'usure, on évite ces inconvénients, les moyens embrayeurs, ainsi que la butée de débrayage, qui est usuellement en appui constant sur les moyens débrayeurs, occupant alors la même position lorsque l'embrayage est en position d'engagement en sorte que l'encombrement axial de l'encombrement axial de l'embrayage est réduit.

Dans la demande de brevet français FR-A-2 753 503 déposée le 17 septembre 1996, il est proposé un dispositif de rattrapage d'usure comprenant d'une part des moyens à rampes solidaire en rotation d'une denture externe et placés entre le plateau de pression et les moyens d'appui pour constituer un plateau de pression d'épaisseur variable entre sa face de friction pour la garniture de friction concernée du disque de friction et les moyens d'appui et comprenant, d'autre part, une cassette portée par le couvercle et comprenant une vis sans fin coopérant avec la denture des moyens à rampes, et du type dans lequel les moyens d'appui, la denture externe et les rampes sont réalisées en une pièce unique en forme d'anneau de réglage portée par le plateau de pression.

La vis sans fin de la cassette coopère avec les dents de la denture appartenant à l'anneau de réglage à rampes qui est placé axialement entre les moyens embrayeurs et le plateau de pression.

La vis sans fin coopère avec la denture et avec des moyens d'entraînement en rotation, comprenant un ressort hélicoïdal, qui sont rendus opérationnels par l'usure de ou des garnitures de friction lorsque l'embrayage est engagé. La vis sans fin est montée tangentiellement par rapport à sa denture associée. En variante, comme décrit dans le document FR-98/11991 déposé le 23 septembre 1998, la denture appartient à une pièce intermédiaire liée en rotation à l'anneau à rampes par une liaison autorisant un mouvement axial de cet anneau.

Dans le document FR-A-2 402 114, il a été proposé une solution pour améliorer le fonctionnement d'un tel dispositif de rattrapage d'usure afin que, en cas de vibrations axiales, engendrées par le vilebrequin du moteur, ou en cas d'une surcourse des moyens embrayeurs lors de l'opération de débrayage, les rampes ne tournent pas et qu'aucun rattrapage d'usure ne se produise. Plus précisément, dans ce document FR-A-2 402 114, plusieurs attaches élastiques en forme de boucles agissent entre l'anneau de réglage à rampes et le plateau de pression.

Chaque attache est fixée à une oreille interne de l'anneau et a une extrémité libre en contact avec une oreille du plateau de pression.

Dans ce document, l'anneau de réglage est fixé en rotation grâce à des saillies axiales du plateau de pression pénétrant dans des ouvertures complémentaires réalisées dans l'anneau de réglage à rampes. L'anneau de réglage n'a donc pas une forme aussi simple que souhaitée.

La présente invention a pour objet de pallier cet inconvénient tout en continuant à bénéficier d'un fonctionnement amélioré du dispositif de rattrapage d'usure.

Dans ce but, l'invention propose un mécanisme d'embrayage à dispositif de rattrapage d'usure du type mentionné précédemment doté d'un anneau de réglage à rampes mobile en rotation, caractérisé en ce qu'il comporte au moins une languette élastique de freinage une première extrémité portée par le plateau de pression une deuxième extrémité et qui coopère avec l'anneau à rampes en étant décalée circonférentiellement par rapport à la première extrémité.

Grâce à l'invention, on bénéficie d'un fonctionnement amélioré comme dans le document FR-A-2 402 114, en sorte qu'aucun rattrapage d'usure ne se produit en cas de vibrations axiales et/ou de torsions engendrées par le vilebrequin du véhicule ou en cas d'une surcourse des moyens embrayeurs lors de l'opération de débrayage.

L'anneau de réglage à rampes à une forme plus simple et est rotatif par rapport au plateau de réaction. On peut donc utiliser l'anneau des documents FR-A-2 753 503 ou FR-98/11991 précités. Grâce au décalage circonférentiel des extrémités des languettes, on obtient un effet de freinage sans risque de destruction.

En effet, les attaches élastiques du document FR-A-2 402 114 ne peuvent pas coopérer avec un anneau rotatif car en cas de rotation de l'anneau, ces attaches subissent un vrillage préjudiciable à leur durée de vie.

Les languettes de freinage, selon l'invention, sont donc conformées pour coopérer avec un anneau de réglage à rampes rotatif.

Selon d'autres caractéristiques de l'invention :
- la languette de freinage est fixée à la périphérie interne du plateau de pression, et elle s'étend selon une direction globalement tangentielle par rapport à une circonférence du mécanisme en sorte que la languette travaille dans de bonnes conditions.;
- l'une des extrémités tangentielles de la languette de freinage comporte une protubérance qui coopère avec une portion en vis-à-vis de l'anneau à rampes qui ainsi à une double fonction ;
- la protubérance s'étend radialement vers l'extérieur et coopère avec la face axiale en vis-à-vis de l'une des rampes de l'anneau à rampes ;
- la protubérance est sollicitée élastiquement en appui contre ladite face axiale de l'une des rampes de manière à pincer axialement l'anneau à rampes entre la languette de freinage et la portion en regard du plateau de pression ;
- la protubérance s'étend tangentiellement et coopère avec un bord périphérique interne de l'anneau à rampes ;
- ledit bord est le bord périphérique interne de l'une des rampes de l'anneau à rampes ;
- la protubérance est sollicitée élastiquement en appui contre ledit bord interne ;
- la protubérance comporte une portion active bombée dont la face convexe coopère avec ladite portion de l'anneau à rampes ;
- la languette de freinage est fixée au plateau de pression par rivetage, boulonnage, vissage ou autres organes de fixation ;
- le corps du rivet de fixation de la languette de freinage est parallèle à l'axe du mécanisme et s'étend à travers un trou formé dans la partie centrale de la languette de freinage qui est conformée en une plaque adjacente à une face axiale en regard du plateau de pression ;
- l'autre extrémité tangentielle de la languette de freinage coopère avec un bossage du plateau de pression pour positionner angulairement la languette de freinage autour de l'axe du rivet.

D'autres caractéristiques et avantages de l'invention apparaîtront à la lecture de la description détaillée qui suit pour la compréhension de laquelle on se reportera aux dessins annexés dans lesquels :
- la figure 1 est une vue de face d'un mécanisme d'embrayage selon un premier mode de réalisation de l'invention avec des arrachements partiels pour montrer le diaphragme, une languette tangentielle de freinage et le dispositif de rattrapage d'usure comportant la cassette et l'anneau de réglage à rampes ;
- la figure 2 est une vue de détail à plus grande échelle de la partie centrale supérieure de la figure 1 ;
- les figures 3 et 4 sont des vues en section selon les lignes 3-3 et 4-4 respectivement de la figure 1 ;
- la figure 5 est une vue à plus grande échelle qui illustre l'anneau de réglage à rampes en perspective en association avec une languette tangentielle de freinage selon le premier mode de réalisation ;
- la figure 6 est une vue de détail à grande échelle et en perspective éclatée qui illustre un deuxième mode de réalisation d'une languette de freinage coopérant avec l'anneau de réglage à rampes ; et
- la figure 7 est une vue similaire à celle de la figure 6 sur laquelle les composants sont illustrés en position assemblée.

Les figures représentent un mécanisme d'embrayage formant un ensemble unitaire que l'on vient rapporter usuellement par vissage sur un plateau de réaction avec insertion d'un disque de friction entre le plateau de réaction et le plateau de pression que comporte le mécanisme d'embrayage.

S'agissant d'une application pour véhicule automobile, le plateau de réaction est solidaire en rotation du vilebrequin du moteur à combustion interne, formant arbre menant, tandis que le disque de friction présente à sa périphérie externe des garnitures de friction solidaires d'un support, éventuellement dédoublé, qui est déformable élastiquement selon la direction axiale et accouplé de manière rigide ou élastique à un moyeu solidaire en rotation, ici de l'arbre d'entrée de la boîte de vitesses, formant arbre mené. En variante, le support est rigide axialement et est noyé en partie dans une unique garniture de friction.

Ce sont le ou les garnitures de friction qui sont donc destinées à être serrées de manière débrayage entre les plateaux de pression et de réaction pour transmettre le couple du moteur du véhicule à l'arbre d'entrée de la boîte de vitesses. Pour ce faire, des moyens embrayeurs à action axiale sont prévus pour serrer les garnitures de friction (non représentées) entre une face transversale de friction avant 11 que présente frontalement le plateau de pression 1, et une face de friction, que présente dorsalement le plateau de réaction (non représenté sur les figures) qui peut être porté par un disque flexible solidaire du vilebrequin ou être monté rotatif sur une première masse solidaire du vilebrequin avec intervention d'organes élastiques entre les deux masses pour formation d'un volant amortisseur.

Les moyens embrayeurs forment un équipage avec les moyens débrayeurs prévus pour contrecarrer à volonté l'action des moyens embrayeurs qui prennent appui d'une part sur la face interne d'un couvercle arrière 2 de forme creuse et, d'autre part, sur des moyens d'appui 3 portés par le plateau de pression 1 dont il constitue la face transversale arrière tournée vers le fond du couvercle arrière 2.

Les moyens débrayeurs comportent par exemple des leviers de débrayage sur les extrémités internes desquelles agit une butée de débrayage (non représentée).

Dans l'exemple illustré sur les figures, les moyens embrayeurs et débrayeurs appartiennent à une même pièce appelée diaphragme 4.

Le diaphragme 4 est de forme générale tronconique à l'état libre et il présente une courbe caractéristique (force exercée en fonction de sa déflexion) de forme sinusoïdale.

On obtient une même courbe caractéristique avec une rondelle Belleville.

Pour mémoire, on notera que le diaphragme 4 comporte une partie périphérique externe en forme de rondelle Belleville 41 constituant les moyens embrayeurs. Cette partie périphérique est prolongée radialement vers le centre en direction de l'axe X-X du mécanisme d'embrayage par une partie centrale fragmentée en doigts radiaux 42, par des fentes borgnes 43. Les doigts 42 forment des leviers de débrayage tandis que les fentes 43 débouchent à leur périphérie interne dans l'ouverture centrale du diaphragme 4 et à leur périphérie externe dans des orifices élargis 44 formant les fonds borgnes des fentes 43, ces orifices 44 ayant ici une forme sensiblement rectangulaire.

Le mécanisme d'embrayage comporte donc de manière unitaire un ensemble de pièces de forme générale annulaire, à savoir le plateau de pression avant 1, le couvercle arrière 2, ici en tôle emboutie, et le diaphragme 4 qui prend appui axialement d'une part contre le fond du couvercle 2 et, d'autre part, sur les moyens d'appui 3 pour. serrer axialement les garnitures de friction entre la face transversale avant 11 du plateau de pression 1 et la face de friction correspondante du plateau de réaction.

Le plateau de pression 1 est, comme le plateau de réaction, réalisé en matière moulable telle que de la fonte et il est lié en rotation au couvercle 2 tout en pouvant se déplacer axialement par rapport à ce dernier. Cette liaison est ici assurée par des languettes 10, qui sont déformables élastiquement selon la direction axiale et qui sont d'orientation tangentielle en étant fixées, ici par rivetage, à l'une de leurs extrémités au couvercle 2 et à l'autre de leurs extrémités au plateau de pression 1. Plus précisément, chaque languette 10 est fixée à une patte 12 du plateau de pression 1 qui est saillante radialement vers l'extérieur et à un rebord transversal 9 du couvercle 2. En variante, les languettes 10 sont d'orientation radiale.

Les languettes 10 constituent des moyens de rappel du plateau de pression 1. Plus précisément, le couvercle 2 présente d'une part un fond 21 troué centralement et d'orientation générale transversale perpendiculaire à l'axe X-X et, d'autre part, des moyens 22 de fixation du couvercle 2 au plateau de réaction.

Les moyens de fixation sont constitués par un rebord radial d'extrémité 22 du couvercle 2.

Le diaphragme 4 s'appuie axialement à la périphérie externe de sa rondelle Belleville 41 sur les moyens d'appui 3, tandis que la périphérie interne de sa rondelle Belleville 41 est montée de manière basculante entre deux appuis axialement en vis-à-vis, respectivement un appui secondaire 25 porté par des pattes de fixation 26 d'orientation axiale et un appui primaire 24 porté en vis à vis de l'appui secondaire 25 par le fond 21 du couvercle 2. En position engagée de l'embrayage, le diaphragme 4 est en appui sur l'appui primaire et sur les moyens d'appui 3 du plateau de pression 1. De manière connue, les pattes 26 sont issues par découpe et pliage du fond 21 du couvercle en étant réparties de manière régulière circonférentiellement. Les pattes 26 traversent les orifices 44 et présentent à leur extrémité libre un coude de calage pour une couronne jonc de forme tronconique dont l'arête externe forme l'appui 25.

Pour maintenir, lorsque l'embrayage est embrayé, les moyens embrayeurs à action axiale 4 dans une position indépendante de l'usure des garnitures du disque de friction, et dans une moindre mesure de l'usure des plateaux de pression et de réaction dont les faces, dites de friction, s'usent au contact des garnitures du disque de friction, il est prévu un dispositif de rattrapage d'usure qui comprend une cassette 30 et un anneau 100 de réglage à rampes 32.

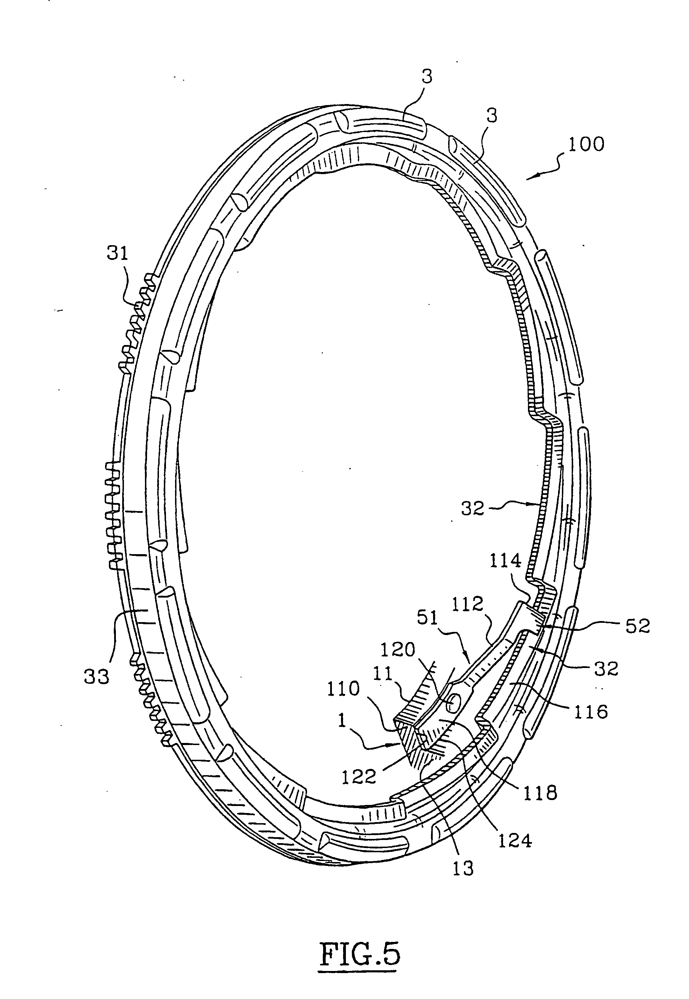

Plus précisément, l'anneau 100 de réglage à rampes 32 est un anneau en tôle découpée et emboutie de façon à présenter, ici à sa périphérie interne, des rampes 32 disposées circonférentiellement de manière régulière, l'anneau 100 de réglage présentant également des zones d'appui 3 constituées par l'arête supérieure arrondie d'emboutis en arcs de cercle qui sont centrés sur l'axe X-X de l'embrayage et qui sont placés radialement à l'extérieur par rapport aux rampes 32 (voir notamment figure 5).

Le plateau de pression 1 présente ici, réalisés venus de moulage, sur sa face transversale arrière tournée vers le fond 21 troué centralement du couvercle 2, des plots 13 répartis circonférentiellement à une distance l'un de l'autre qui correspond à celle qui sépare circonférentiellement deux rampes consécutives 32, les plots 13 étant destinés à coopérer chacun avec une rampe 32.

L'anneau de réglage 100 à rampes 32 est placé axialement entre le diaphragme 4 et le plateau de pression 1 en sorte que les plots 13 coopèrent avec la rampe 32 et que le diaphragme 4 coopère avec les zones d'appui 3 qui constituent ainsi les moyens d'appui, qui sont ici fractionnés (figure 5) mais qui peuvent en variante être continus, par l'intermédiaire desquels le diaphragme 4 agit sur le plateau de pression 1.

L'une au moins des zones d'appui 3 de l'anneau 100 de réglage à rampes 32 est prolongé à sa périphérie externe par un rebord 33 annulaire d'orientation axiale parallèle à l'axe X-X, se terminant selon un retour transversal, c'est-à-dire s'étendant radialement vers l'extérieur dans un plan perpendiculaire à l'axe X-X, et qui est muni à sa périphérie externe d'une denture 31 en sorte que le rebord radialement extérieur et d'orientation axiale 33 de l'anneau 100 de réglage est centré par une surépaisseur du plateau de pression 1 dans chacune desquelles est formé un plot 13.

Le plateau de pression 1 a ainsi une épaisseur variable, c'est-à-dire plus précisément que la distance entre sa face frontale avant de friction il et les zones d'appui coplanaires 3 varie en fonction des usures précitées.

La cassette 30 du dispositif de rattrapage d'usure comprend, de manière connue, une roue à rochet 102 solidaire d'un axe 104 qui porte également une vis sans fin 106 dont le filet et le pas sont adaptés à la denture 31 pour venir en prise avec la dite denture.

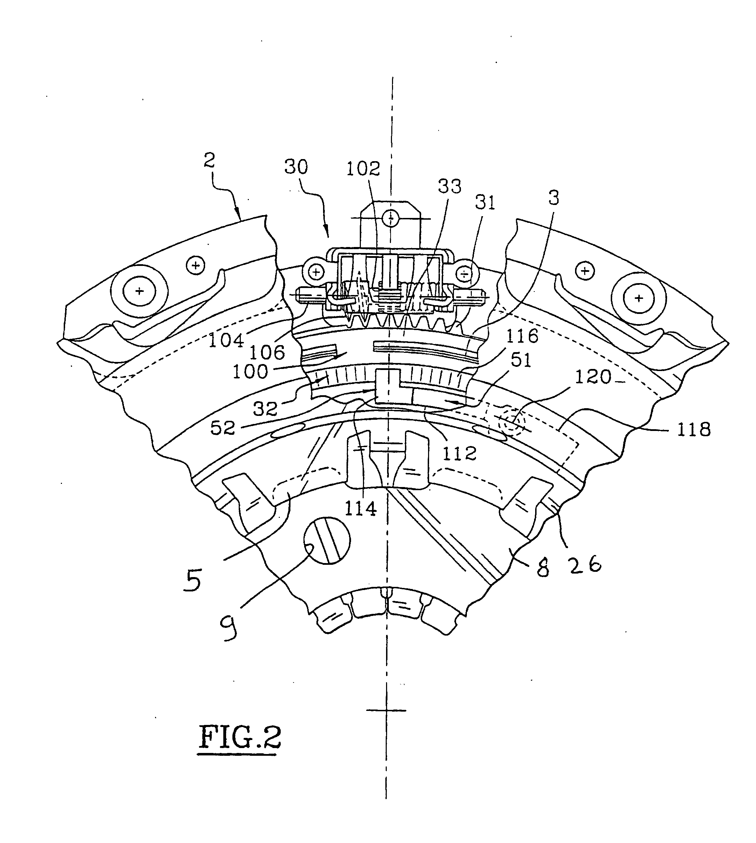

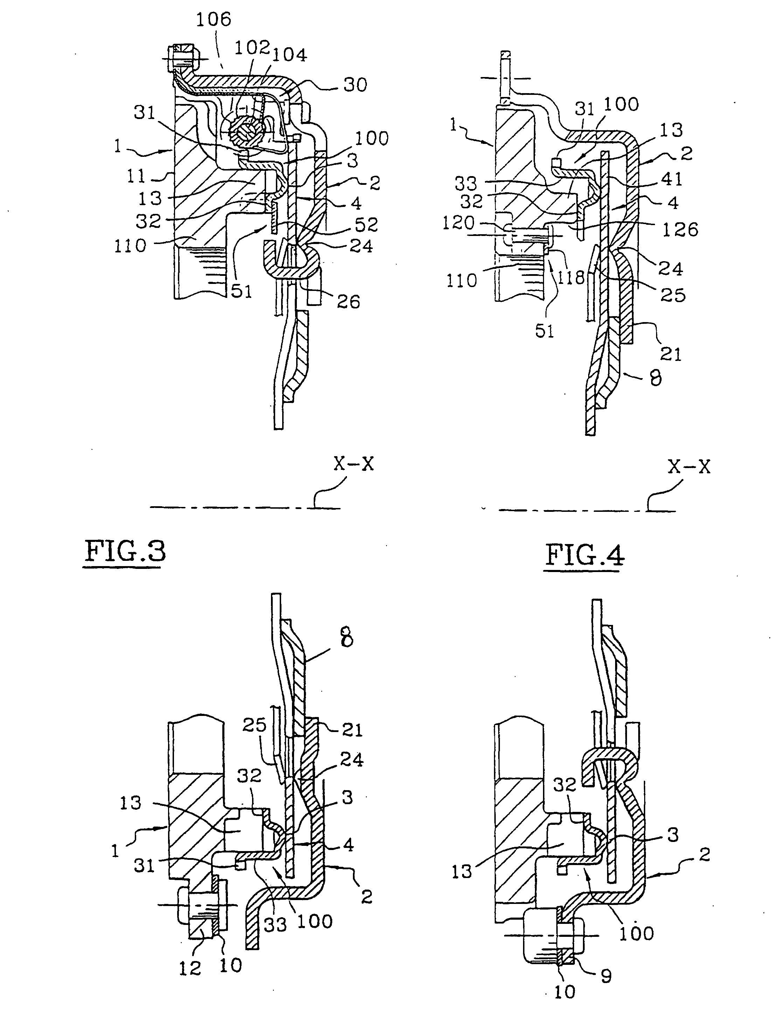

Le fonctionnement général du dispositif de rattrapage de jeu 30, 100 qui vient d'être décrit sommairement est connu et ne sera pas décrit en détail. Si besoin est, on pourra se reporter au contenu des demandes de brevet français FR-A-2 753 305 et FR-98/11991 dont la partie de la description correspondante doit être considérée comme faisant partie de la présente demande. Pour mémoire, on rappellera que le diaphragme 4 présente à sa périphérie externe un appendice pour agir sur une languette de commande (non référencée à la figure 3) venant en prise avec les dents de la roue à rochet 102. En cas d'usure, le diaphragme s'incline et actionne par l'intermédiaire de la languette de commande, la roue à rochet 102, qui comprime un ressort de rattrapage (non référencée à la figure 2). Ce ressort de rattrapage est monté autour de l'axe 104 et agit entre les bras d'un support de la cassette 30 et la roue à rochet, comme visible à la figure 2. Le support se fixe sur le couvercle, comme visible à la figure 3. Ainsi, en cas d'usure, on arme le ressort de rattrapage, qui est, en fonction des frottements, admis à se détendre lors d'une opération de débrayage pour pousser la vis sans fin 106 et faire tourner la denture 31 de l'anneau 100, qui est centré sur le plateau de pression 1 grâce au rebord 32 coopérant par sa périphérie interne avec la périphérie externe d'une surépaisseur axiale du plateau de pression 1.

C'est cette surépaisseur, ici annulaire, qui porte les plots 13 et sert de portée annulaire de guidage et de centrage à l'anneau 100. L'anneau 100 est donc monté de manière rotative sur le plateau de pression 1.

Les moyens d'appui 3 pour la périphérie externe de la rondelle Belleville 41 du diaphragme 4 sont ainsi constitués par un bossage annulaire d'orientation axiale et fragmenté appartenant à l'anneau 100 de réglage dont les rampes 32 coopèrent avec la face d'extrémité transversale arrière, avantageusement chanfreinée, des plots 13 formant contre-rampes.

Conformément aux enseignements de l'invention, il est prévu des moyens de freinage en rotation de l'anneau 100 de réglage à rampes 32 rotatif par rapport au plateau de pression 1 avec ses plots 13.

Ces moyens de freinage sont constitués par au moins une languette 51 qui est une languette de freinage métallique et élastique qui est fixée par rivetage vissage, boulonnage etc à la périphérie radiale interne, d'orientation transversale, 110 du plateau de pression 1. Une première extrémité de la languette 51 est portée à fixation par le plateau de pression 1, tandis que la deuxième extrémité de la languette 51 coopère avec l'anneau à rampe 32 en étant décalée circonférentiellement par rapport à la première extrémité.

D'une manière générale, la languette de freinage 51 s'étend tangentiellement par rapport à une circonférence de l'ensemble et elle présente une protubérance 52 pour coopérer par friction avec l'une des rampes 32 en vis-à-vis, le corps de la languette 51 s'étendant en majeure partie sous la rampe correspondante 32. La protubérance 52 appartient à la deuxième extrémité de la languette 51 et est d'orientation transversale ou radiale.

Ainsi, l'anneau de réglage 100 comportant les rampes 32, les moyens d'appui 3, le rebord 33 et la denture 31 est pincée axialement au niveau d'une rampe 32, plus précisément ici au niveau de la rampe 32 située en regard de la cassette 30, entre la languette de freinage 51, qui est ici axialement élastique, et le plot 13 correspondant. L'élasticité de la languette 51 dépend de la longueur de celle-ci.

Plus précisément, comme on peut le voir notamment aux figures 2 et 5, le corps 112 de la languette de freinage 51 est une pièce en tôle qui s'étend globalement dans un plan transversal perpendiculaire à l'axe X-X en étant légèrement coudé de manière que sa première extrémité libre comporte la protubérance 52 qui se prolonge radialement vers l'extérieur pour s'étendre en regard de la face axiale arrière, d'orientation transversale, 116 de la rampe 32 correspondante, qui ainsi à une double fonction et coopère ainsi avec l'un des plots 13 et avec la languette de freinage 31.

L'autre extrémité tangentielle 118 du corps 112 de la languette de freinage 51, à savoir la première extrémité de la languette 51, constitue la partie de la languette assurant sa fixation sur la portion 110 du plateau de pression 1.

A cet effet, un rivet 120 traverse la portion 110 et l'extrémité 118 pour plaquer cette dernière axialement vers l'avant contre la face d'orientation transversale 120 de la portion annulaire 110 du plateau de pression 1. En variante, les rivets 120 sont remplacés par d'autres organes de fixation, vis etc.

Afin de maintenir la languette de freinage 51 avec son orientation tangentielle, sa première extrémité 118 de fixation est immobilisée en rotation car son bord radialement extérieur 124 coopère avec une portion en vis-à-vis 126 du plot 13 correspondant. La languette 51 est ainsi peu sensibles aux phénomènes de la force centrifuge.

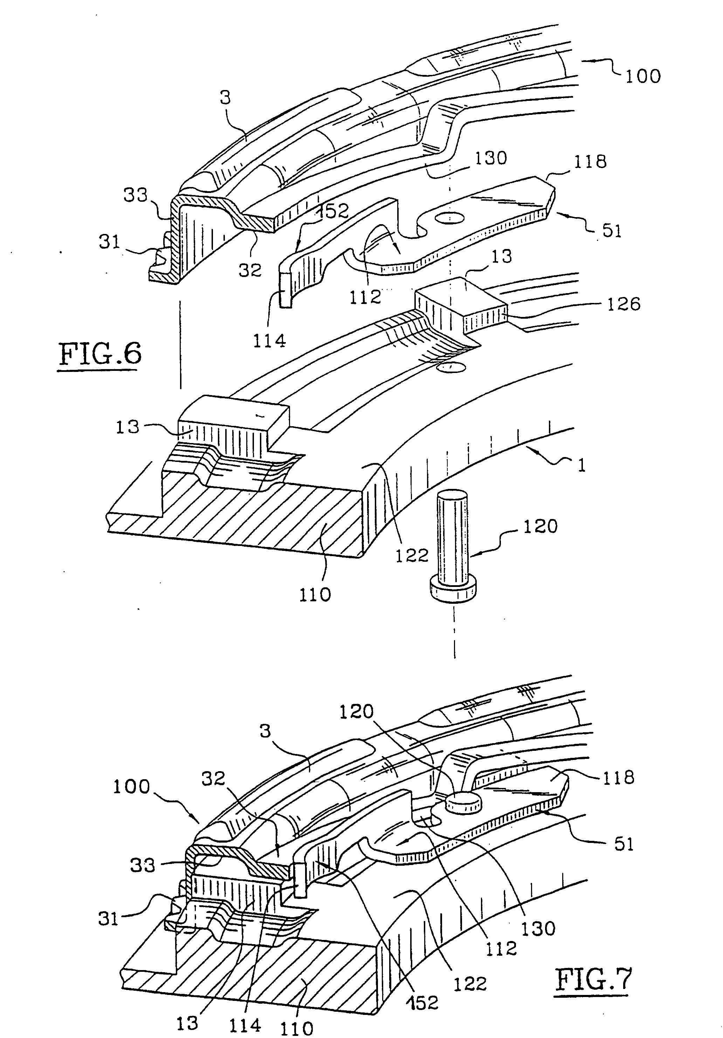

On décrira maintenant le deuxième mode de réalisation d'une languette de freinage 51 illustrée aux figures 6 et 7.

Dans ce deuxième mode de réalisation, la languette de freinage 51 est toujours globalement d'orientation tangentielle mais elle est à action radiale, c'est-à-dire que sa deuxième extrémité libre 114 comporte une protubérance 152 qui est en appui élastique contre la portion en vis-à-vis du bord périphérique radialement interne 130 de la rampe 32 correspondante.

La protubérance 152 présente de préférence un profil bombé en arc de cylindre d'orientation axiale dont la convexité coopère avec le bord périphérique radialement interne 130 de la rampe 32, la largeur axiale, c'est-à-dire la hauteur en considérant les figures 6 et 7, de la protubérance 52 étant conçue de manière à ce que cette dernière coopère toujours avec le bord 130 quelle que soit la position angulaire de l'anneau de réglage 100, c'est-à-dire quelle que soit aussi la position axiale réglée de celui-ci par rapport au plateau de pression 1.

C'est l'un des plots 13, qui, comme à la figure précédente, par sa tranche, forme la portion 126 avec laquelle coopère le bord axial extérieur de la première extrémité de la languette. Plus le plateau de pression tourne vite, plus la languette 51 exerce une action de serrage sur le bord interne de l'anneau.

Bien entendu, comme décrit dans le document FR-98/11991 déposé le 23 septembre 1998, la denture 31 peut appartenir à une pièce intermédiaire calée en translation sur le couvercle et liée en rotation à l'anneau 100 tout en autorisant un mouvement axial de l'anneau. Par exemple, des languettes 10 d'un même jeu présentant un prolongement pour pincer la pièce intermédiaire liée à l'anneau par une liaison de type tenons-mortaises ou par des languettes du type des languettes 10.

L'invention est applicable à un mécanisme du type de celui décrit dans le document FR-A-2 424 442 dans lequel le diaphragme présente une patte périphérique reçu dans un évidemment d'un tambour relié par un embrayage à ressort unidirectionnel à la vis sans fin.

La présence d'une languette de commande n'est donc pas obligatoire et la cassette 30 peut être remplacée par un système à tambour, à vis sans fin et à axe porté par le couvercle comme décrit dans le document FR-A-2 424 442 auquel on se reportera pour plus de précisions.

La languette de freinage peut agir sur les rampes coopérant avec des contre-rampes rapportées sur le plateau de pression comme décrit dans le document FR-A-2 424 442. La languette peut donc agir à la périphérie externe du plateau de pression.

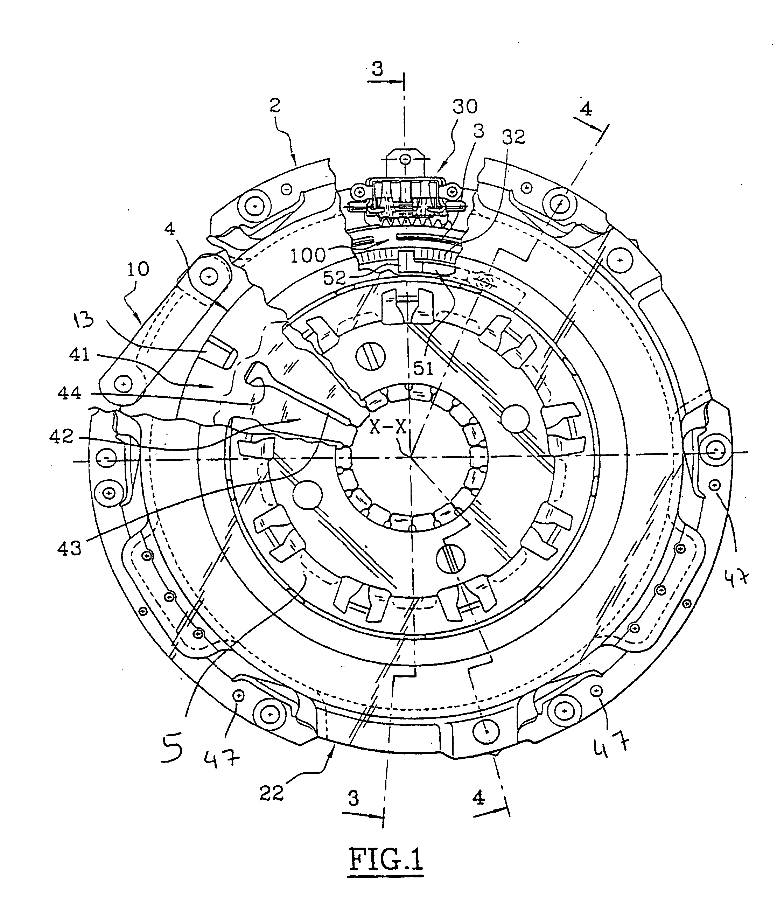

Dans les figures, on a représenté en 8 une pièce de support en forme d'anneau portant à sa périphérie externe des pattes de calage (non référencées à la figure 1) saillantes radialement vers l'extérieur.

Les pattes de calage sont insérées axialement entre des pattes de butées 5, que présente le fond 21 du couvercle 2 à sa périphérie interne, et les doigts 42 du diaphragme. L'anneau 8 présente à sa périphérie interne un bourrelet (non référence) pour contact avec la périphérie interne des doigts 42.

L'anneau 8 protège la cassette 30 avant montage du mécanisme d'embrayage sur le plateau de réaction ou une pièce solidaire du plateau de réaction.

Le montage de l'anneau 8 entre les pattes 5 et les doigts 42, est réalisé notamment en faisant tourner l'anneau 8 à l'aide d'un ou de plusieurs outils venant en prise avec des trous 9 réalisés dans l'anneau. Les pattes 5, d'orientation radiale, alternant avec les pattes 26 en sorte que l'on réalise un montage du type baïonnette de l'anneau 8, les pattes de calage de l'anneau 8 étant amenées sous les pattes 5.

Le démontage de l'anneau 8 est réalisé par une rotation en sens inverse. Le couvercle 2 présente trois logements dont deux (non références) sont visibles à la figure 1.

Les logements sont réalisés à la périphérie externe du couvercle 2. L'un des logements comporte un fond ouvert pour le montage de la cassette 30.

Les deux autres logements sont des fonds fermés pour montage de rivets de prééguilibrage ; pour plus de précisions, on se reportera au document FR-98/01769 dont la priorité est revendiquée .

Comme décrit dans ce document, le couvercle présente de part et d'autre des logements des trous 47 pour le montage de rivets d'équilibrage.

Ainsi, on peut aisément équilibrer le mécanisme d'embrayage. La languette de freinage 51 n'est donc pas gênante sur ce point.

En variante, le diaphragme est monté pivotant sur le couvercle 2 à l'aide de colonnettes ou tout autre moyen portant l'appui secondaire 25. Bien entendu, la languette de freinage 51 de la figure 5 peut être interposée axialement par l'intermédiaire de sa protubérance 52, entre les plots 13 et les rampes 32 pour freiner l'anneau.

La présence de l'anneau 8 n'est pas obligatoire. Ainsi le fond du couvercle peut être prolongé vers l'intérieur pour former une butée, décalée axialement par rapport à l'appui primaire et ce en direction opposée au plateau de pression.

C'est sur cette butée que prend appui le diaphragme avant montage du mécanisme d'embrayage sur le plateau de réaction en sorte que la cassette est protégée.

Bien entendu, la cassette peut avoir une autre forme comme décrit par exemple dans le document PCT/FR99/00261 déposé le 5 février 1998.

Ainsi, à la lumière de cette demande PCT/FR99/00261 l'organe élastique peut former à lui seule support de la cassette. Le ressort de rattrapage peut être disposé hors de la cassette en étant par exemple implanté entre un plot et une rampe. Dans ce cas le logement du couvercle peut constituer le support de la cassette.

## Revendications

1. Mécanisme d'embrayage, du type comportant un couvercle (2), un plateau de pression (1) lié en rotation au couvercle (2) tout en pouvant se déplacer axialement par rapport à celui-ci, des moyens d'appui (3) portés par le plateau de pression (1), des moyens embrayeurs (4, 41) à action axiale agissant entre le couvercle (2) et les moyens d'appui (3), et un dispositif de rattrapage d'usure comprenant d'une part des moyens (100) à rampes (32) solidaires en rotation d'une denture externe (31) et placés entre le plateau de pression (1) et les moyens d'appui (3) pour constituer un plateau de pression (1, 100) d'épaisseur variable entre sa face de friction (11) et les moyens d'appui (3) et comprenant, d'autre part, une cassette (30) portée par le couvercle (2) et comprenant une vis sans fin (106) coopérant avec la denture (31) solidaire en rotation des moyens à rampes (32), et du type dans lequel les moyens d'appui (3), et les rampes (32) sont réalisés en une pièce unique en forme d'anneau (100) portée par le plateau de pression (1), **caractérisé en ce qu'**il comporte au moins une languette de freinage (51) portée par le, plateau de pression (1) et qui coopère avec l'anneau (100) à rampes (32) afin que, en cas de vibrations axiales ou lors d'une surcourse des moyens embrayeurs (4,41) lors du débrayage, les rampes (32) ne tournent pas et qu'aucun rattrapage d'usure ne se produise.

2. Mécanisme d'embrayage selon la revendication précédente, **caractérisé en ce que** la languette de freinage (51) est fixée à la périphérie interne (110) du plateau de pression (1), et **en ce qu'**elle s'étend selon une direction globalement tangentielle par rapport à une circonférence du mécanisme.

3. Mécanisme selon la revendication précédente, **caractérisé en ce que** l'une (114) des extrémités tangentielles de la languette de freinage (51) comporte une protubérance (52) qui coopère avec une portion en vis-à-vis de l'anneau à rampes (32).

4. Mécanisme selon la revendication 3, **caractérisé en ce que** la protubérance (52) s'étend radialement vers l'extérieur et coopère avec la face axiale en vis-à-vis (116) de l'une des rampes (32) de l'anneau (100) à rampes (32).

5. Mécanisme selon la revendication précédente, **caractérisé en ce que** la protubérance (52) est sollicitée élastiquement en appui contre ladite face axiale (116) de l'une des rampes (32) de manière à pincer axialement l'anneau (100) à rampes entre la languette de freinage (51) et la portion en regard du plateau de pression (1, 13).

6. Mécanisme selon la revendication 3, **caractérisé en ce que** la protubérance (52) s'étend tangentiellement et coopère avec un bord périphérique interne (130) de l'anneau (100) à rampes (32).

7. Mécanisme selon la revendication précédente, **caractérisé en ce que** ledit bord est le bord périphérique interne (130) de l'une des rampes (32) de l'anneau (100) à rampes.

8. Mécanisme selon la revendication 6, **caractérisé en ce que** la protubérance (52) est sollicitée élastiquement en appui contre ledit bord interne (130).

9. Mécanisme selon la revendication précédentes, **caractérisé en ce que** la protubérance (52) comporte une portion active bombée dont la face convexe coopère avec ladite portion (116, 130) de l'anneau (100) à rampes (32).

10. Mécanisme selon la revendication 3, **caractérisé en ce que** la languette de freinage (51) est fixée au plateau de pression (1) par rivetage (120).

11. Mécanisme selon la revendication précédente, **caractérisé en ce que** le corps du rivet (126) de fixation de la languette de freinage (51) est parallèle à l'axe (X-X) du mécanisme et s'étend à travers un trou formé dans la partie centrale (112) de la languette de freinage (51) qui est conformée en une plaque adjacente à une face axiale (122) en regard du plateau de pression (1, 110).

12. Mécanisme selon la revendication précédente, **caractérisé en ce que** l'autre extrémité tangentielle (118) de la languette de freinage (51) coopère avec un bossage (13) du plateau de pression (1) pour positionner angulairement la languette de freinage autour de l'axe du rivet (120).

## Patentansprüche

1. Kupplungsmechanismus, umfassend einen Deckel (2), eine Druckplatte (1), die drehfest mit dem Deckel (2) verbunden ist, wobei sie sich im Verhältnis zu diesem axial verschieben kann, an der Druckplatte (1) angebrachte Auflagemittel (3), axial wirksame Einrückmittel (4, 41), die zwischen dem Deckel (2) und den Auflagemitteln (3) wirken, und eine Verschleißnachstellvorrichtung, die einerseits drehfest mit einer Außenzahnung (31) verbundene und zwischen der Druckplatte (1) und den Auflagemitteln (3) angeordnete Rampenmittel (100) mit Rampen (32) umfasst, um eine Druckplatte (1, 100) mit veränderlicher Dicke zwischen ihrer Reibfläche (11) und den Auflagemitteln (3) zu bilden, und die andererseits eine am Deckel (2) angebrachte Kassette (30) umfasst, die eine Schnecke (106) enthält, die mit der drehfest mit den Rampenmitteln mit Rampen (32) verbundenen Zahnung (31) zusammenwirkt, wobei die Auflagemittel (3) und die Rampen (32) als ein an der Druckplatte (1) angebrachtes einziges ringförmiges Teil (100) ausgeführt sind, **dadurch gekennzeichnet, dass** er wenigstens eine elastische Bremszunge (51) umfasst, die an der Druckplatte (1) angebracht ist und die mit dem Ring (100) mit Rampen (32) zusammenwirkt, damit sich die Rampen (32) im Falle von axialen Schwingungen oder bei einem Überweg der Einrückmittel (4, 41) beim Ausrücken nicht drehen und damit keine Verschleißnachstellung stattfindet.

2. Kupplungsmechanismus nach dem vorangehenden Anspruch, **dadurch gekennzeichnet, dass** die Bremszunge (51) am inneren Umfang (110) der Druckplatte (1) befestigt ist und dass sie sich entlang einer im Verhältnis zu einem Kreisumfang des Mechanismus insgesamt tangentialen Richtung erstreckt.

3. Mechanismus nach dem vorangehenden Anspruch, **dadurch gekennzeichnet, dass** eines (114) der tangentialen Enden der Bremszunge (51) eine Ausstülpung (52) umfasst, die mit einem gegenüberliegenden Abschnitt des Rampenrings mit Rampen (32) zusammenwirkt.

4. Mechanismus nach Anspruch 3, **dadurch gekennzeichnet, dass** sich die Ausstülpung (52) radial nach außen erstreckt und mit der gegenüberliegenden axialen Fläche (116) einer der Rampen (32) des Rampenrings (100) mit Rampen (32) zusammenwirkt.

5. Mechanismus nach dem vorangehenden Anspruch, **dadurch gekennzeichnet, dass** die Ausstülpung (52) in Anlage an der besagten axialen Fläche (116) einer der Rampen (32) elastisch beaufschlagt wird, um den Rampenring (100) zwischen der Bremszunge (51) und dem gegenüberliegenden Abschnitt der Druckplatte (1, 13) axial einzuspannen.

6. Mechanismus nach Anspruch 3, **dadurch gekennzeichnet, dass** sich die Ausstülpung (52) tangential erstreckt und mit einer inneren Umfangskante (130) des Rampenrings (100) mit Rampen (32) zusammenwirkt.

7. Mechanismus nach dem vorangehenden Anspruch, **dadurch gekennzeichnet, dass** die besagte Kante die innere Umfangskante (130) einer der Rampen (32) des Rampenrings (100) ist.

8. Mechanismus nach Anspruch 6, **dadurch gekennzeichnet, dass** die Ausstülpung (52) in Anlage an der besagten Innenkante (130) elastisch beaufschlagt wird.

9. Mechanismus nach dem vorangehenden Anspruch, **dadurch gekennzeichnet, dass** die Ausstülpung (52) einen gewölbten Wirkabschnitt umfasst, dessen konvexe Fläche mit dem besagten Abschnitt (116, 130) des Rampenrings (100) mit Rampen (32) zusammenwirkt.

10. Mechanismus nach Anspruch 3, **dadurch gekennzeichnet, dass** die Bremszunge (51) an der Druckplatte (1) durch Aufnieten (120) befestigt ist.

11. Mechanismus nach dem vorangehenden Anspruch, **dadurch gekennzeichnet, dass** der Körper des Befestigungsniets (126) der Bremszunge (51) parallel zur Achse (X-X) des Mechanismus verläuft und sich durch ein Loch erstreckt, das im Mittelteil (112) der Bremszunge (51) ausgebildet ist, der als eine einer gegenüberliegenden axialen Fläche (122) der Druckplatte (1, 110) zugekehrte Platte gestaltet ist.

12. Mechanismus nach dem vorangehenden Anspruch, **dadurch gekennzeichnet, dass** das andere tangentiale Ende (118) der Bremszunge (51) mit einem Vorsprung (13) der Druckplatte (1) zusammenwirkt, um die Bremszunge winklig um die Achse des Niets (120) zu positionieren.

## Claims

1. Clutch mechanism, of the type comprising a cover (2), a pressure plate (1) rotationally connected to the cover (2) while being able to move axially with respect to it, support means (3) carried by the pressure plate (1), axially acting engagement means (4, 41) acting between the cover (2) and the support means (3), and a wear take-up device comprising on the one hand means (100) with ramps (32) rotationally fixed to external teeth (31) and placed between the pressure plate (1) and the support means (3) in order to constitute a pressure plate (1, 100) with variable thickness between its friction face (11) and the support means (3) and comprising on the other hand a cartridge (30) carried by the cover (2) and comprising a worm (106) cooperating with the teeth (31) rotationally fixed to the ramp means (32), and of the type in which the support means (3) and the ramps (32) are produced in a single piece in the form of a ring (100) carried by the pressure plate (1), **characterised in that** it comprises at least one braking tongue (51) carried by the pressure plate (1) and which cooperates with the ring (100) with ramps (32) so that, in the event of axial vibrations or when there is an overtravel of the engagement means (4, 41) during declutching, the ramps (32) do not turn and no wear take up occurs.

2. Clutch mechanism according to the preceding claim, **characterised in that** the braking tongue (51) is fixed to the internal periphery (110) of the pressure plate (1) and **in that** it extends in a direction tangential overall with respect to a circumference of the mechanism.

3. Mechanism according to the preceding claim, **characterised in that** one (114) of the tangential ends of the braking tongue (51) comprises a protuberance (52) which cooperates with a facing portion of the ring with ramps (32).

4. Mechanism according to Claim 3, **characterised in that** the protuberance (52) extends radially towards the outside and cooperates with the facing axial face (116) of one of the ramps (32) of the ring (100) with ramps (32).

5. Mechanism according to the preceding claim, **characterised in that** the protuberance (52) is forced elastically in abutment against the said axial face (116) of one of the ramps (32) so as to axially grip the ring (100) with ramps between the braking tongue (51) and the facing portion of the pressure plate (1, 13).

6. Mechanism according to Claim 3, **characterised in that** the protuberance (52) extends tangentially and cooperates with an internal peripheral edge (130) of the ring (100) with ramps (32).

7. Mechanism according to the preceding claim, **characterised in that** the said edge is the internal peripheral edge (130) of one of the ramps (32) of the ring (100) with ramps.

8. Mechanism according to Claim 6, **characterised in that** the protuberance (52) is forced elastically in abutment against the said internal edge (130).

9. Mechanism according to the preceding claim, **characterised in that** the protuberance (52) comprises a curved active portion whose convex face cooperates with the said portion (116, 130) of the ring (100) with ramps (32).

10. Mechanism according to Claim 3, **characterised in that** the braking tongue (51) is fixed to the pressure plate (1) by riveting (120).

11. Mechanism according to the preceding claim, **characterised in that** the body of the rivet (126) fixing the braking tongue (51) is parallel to the axis (X-X) of the mechanism and extends through a hole formed in the central part (112) of the braking tongue (51), which is shaped as a plate adjacent to a facing axial face (122) of the pressure plate (1, 110).

12. Mechanism according to the preceding claim, **characterised in that** the other tangential end (118) of the braking tongue (51) cooperates with a protrusion (13) on the pressure plate (1) in order to angularly position the braking tongue around the axis of the rivet (120).
